# FASCICULE DE BREVET EUROPEEN

(11) **EP 2 015 385 B1**
(45) Date de publication et mention de la délivrance du brevet: **24.10.2012**
(21) Numéro de dépôt: 08159975.5
(22) Date de dépôt: 09.07.2008
(51) Int. Cl.: H01M 8/04

(54) **Système et méthode de régulation en température d'une pile à combustible**
System und Methode zur Temperaturregulierung einer Brennstoffzelle
System and method for regulating the temperature of a fuel cell

(30) Priorité: 12.07.2007 FR 0756460
(43) Date de publication de la demande: 14.01.2009
(73) Titulaire: SNECMA, 75015 Paris (FR)
(72) Inventeur: Le Gonidec, Serge, 27200, Vernon (FR)
(74) Mandataire: Thévenet, Jean-Bruno

(56) Documents cités:
- WO-A-2005/043661
- JP-A- 2002 184 435
- US-A- 6 087 028
- US-B1- 6 186 254

## Description

### Arrière-plan de l'invention

L'invention concerne la régulation en température d'un dispositif d'alimentation électrique. Le domaine d'application de l'invention est plus particulièrement celui des piles, notamment des piles à combustibles.

La régulation en température d'une pile à combustible a pour objectif de compenser les perturbations thermiques de la pile et/ou de poursuivre une évolution de consigne en température de la pile. D'une manière générale, la régulation en température de la pile à combustible est réalisée par un fluide caloporteur parcourant un circuit de refroidissement.

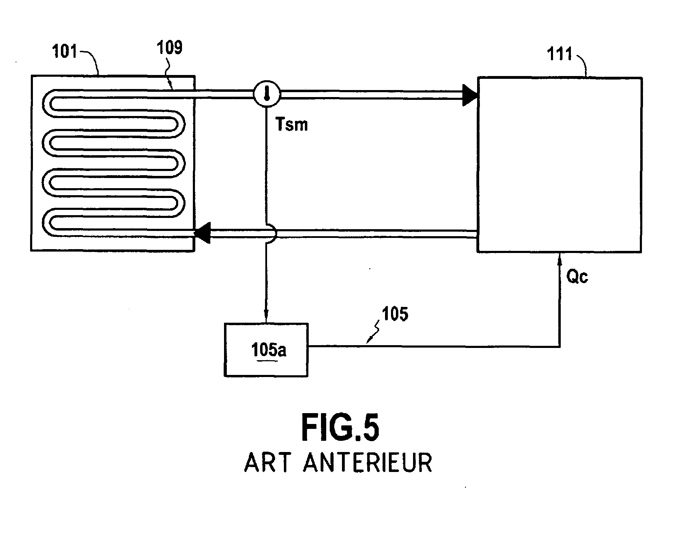

Un schéma traditionnel de régulation en température de la pile à combustible est montré sur la figure 5. Selon ce schéma, le refroidissement de la pile 101 est assuré par un fluide caloporteur parcourant la pile 101 via un circuit de refroidissement 109 qui parcourt des plaques bipolaires de la pile absorbant ainsi les calories dégagées par la réaction de la pile 101. Le fluide caloporteur est alimenté par une source froide 111 reliée au circuit de refroidissement 109. Par ailleurs, le circuit de refroidissement 109 est commandé par une boucle de commande 105 munie d'un moyen de commande 105a qui régule le débit Qc du fluide caloporteur en fonction d'une mesure de température Tsm du fluide caloporteur à la sortie de la pile 101.

Cependant, cette boucle de commande 105 répond uniquement à un besoin d'asservissement en température de la pile 101 et ne répond pas à des problèmes de sécurité qui peuvent surgir par exemple, en cas d'une défaillance de la modulation du débit en fluide caloporteur ou d'autres modes de panne.

La demande internationale de brevet WO 2005/043661 A et le brevet américain US 6 186 254 B1 divulguaient des systèmes de régulation en température de piles à combustible dont le refroidissement est assuré par un fluide caloporteur parcourant la pile. La publication de demande japonaise de brevet JP 2002 184435 A divulguait en outre une méthode de régulation en température d'une telle pile à combustible.

### Objet et résumé de l'invention

L'invention propose à cet effet un système de régulation en température d'une pile à combustible dont le refroidissement est assuré par un fluide caloporteur parcourant la pile, le système comportant un premier moyen de commande pour mesurer la température du fluide caloporteur et pour commander le débit du fluide caloporteur en fonction de ladite mesure de température dudit fluide caloporteur, et un deuxième moyen de commande pour mesurer le débit dudit fluide caloporteur et pour commander la température d'entrée du fluide caloporteur en fonction d'un écart de débit entre la commande en débit générée par ledit premier moyen de commande et ladite mesure correspondante du débit dudit fluide caloporteur, et un actionneur de température pour réguler la température du fluide caloporteur, connecté au deuxième moyen de commande pour recevoir la commande de température d'entrée, de sorte que ladite commande de température générée par le deuxième moyen de commande compense ledit écart de débit.

Ainsi, en cas d'une défaillance de l'alimentation en fluide de refroidissement, par exemple, au cas où les capacités de refroidissement ne sont plus couvertes par la correction de débit (manque de frigories), la commande en température ainsi générée permet de maintenir la pile à une température acceptable et alors maintenir ses performances et d'augmenter sa durée de vie.

Le système comporte un moyen de compensation thermique pour déterminer la valeur de la commande de la température du fluide caloporteur générée par ledit deuxième moyen de commande en comparant la commande en débit générée par ledit premier moyen de commande et la mesure correspondante du débit réalisée par ledit deuxième moyen de commande.

Ainsi, le moyen de compensation thermique permet de compenser de manière simple et précise tout dérèglement de débit du fluide caloporteur.

Selon une particularité de la présente invention, la mesure en température du fluide caloporteur en fonction de laquelle agit le premier moyen de commande correspond à la mesure de température de sortie de la pile et la température du fluide caloporteur commandée par le deuxième moyen de commande correspond à la température d'entrée de la pile.

Ce mode de réalisation permet d'augmenter la précision de la régulation thermique de la pile en tenant compte de plusieurs variables (à savoir, la température d'entrée, la température de sortie qui reflète bien l'échange thermique et le débit) pouvant affecter la puissance thermique échangée entre le fluide caloporteur de refroidissement et la pile.

Avantageusement, le système comporte un moyen de correction thermique pour adapter la commande de température d'entrée en fonction d'un écart entre une température d'entrée souhaitée avec la mesure correspondante de ladite température d'entrée.

Ceci permet d'optimiser la durée de vie et les performances de la pile en compensant les erreurs de température en entrée de la pile. En particulier, ceci permet de couvrir les incertitudes de la régulation thermique d'une source froide du fluide caloporteur de refroidissement et de compenser les pertes thermiques d'une ligne d'alimentation du fluide caloporteur.

Selon un exemple de la présente invention, le système de régulation comporte :
- un premier capteur de température pour mesurer ladite température de sortie du fluide caloporteur à la sortie de la pile,
- un premier moyen de validation pour valider ladite mesure de température de sortie,
- un premier moyen de comparaison pour comparer ladite mesure validée de température de sortie à une température de sortie de consigne prédéterminée afin de détecter un éventuel écart de température de sortie,
- un premier moyen de correction pour déterminer la commande en débit du fluide caloporteur générée par ledit premier moyen de commande en fonction dudit écart de température de sortie, et
- un premier moyen de filtrage pour filtrer ladite commande en débit.

Ceci permet de réguler le débit du fluide de refroidissement tout en protégeant le système de régulation et la pile contre une commande de débit aberrante.

Le système comporte en outre :
- un capteur de débit pour mesurer le débit du fluide caloporteur,
- un deuxième moyen de validation pour valider ladite mesure du débit,
- un deuxième moyen de comparaison pour comparer la mesure de débit validée du fluide de refroidissement à ladite commande en débit générée par le premier moyen de commande afin de déterminer ledit écart de débit,
- un deuxième moyen de filtrage pour filtrer ledit écart de débit,
- un deuxième moyen de correction pour déterminer la correction de température à apporter à une température d'entrée de consigne prédéterminée,
- un troisième moyen de filtrage pour filtrer ladite correction de température d'entrée, et
- un moyen d'addition pour ajouter ladite correction de température à la température d'entrée de consigne prédéterminée afin de définir ladite commande de température d'entrée générée par le deuxième moyen de commande.

Ceci permet de compenser un dérèglement thermique causé par tout écart de débit en agissant sur la température du fluide tout en protégeant le système de régulation et la pile contre une commande de température aberrante.

Le système comporte en outre :
- un deuxième capteur de température pour mesurer la température d'entrée du fluide caloporteur à rentrée de la pile,
- un troisième moyen de validation pour valider la mesure de ladite température d'entrée,
- un troisième moyen de comparaison pour comparer ladite mesure validée de la température d'entrée à ladite commande de température d'entrée issue du deuxième moyen de commande afin de détecter un éventuel écart de température d'entrée,
- un troisième moyen de correction pour adapter la commande de température d'entrée en fonction dudit écart de température d'entrée, et
- un quatrième moyen de filtrage pour filtrer ladite commande de température d'entrée.

Ceci permet de compenser les pertes thermiques du fluide de refroidissement avant son entrée dans la pile tout en protégeant le système de régulation et la pile contre toute commande de température erronée.

Avantageusement, lesdits premier, deuxième et troisième moyens de correction comportent chacun un intégrateur muni d'un moyen de protection de type anti-windup. Ceci permet d'éviter les erreurs dues à la saturation entre les différentes commandes ou mesures pour préserver la stabilité et les performances des boucles de commande.

L'invention vise également une pile à combustible comportant un système de régulation selon au moins une des caractéristiques ci-dessus et un circuit de refroidissement assurant le refroidissement de la pile par le fluide caloporteur, ledit circuit de refroidissement étant relié au système de régulation pour y recevoir les commandes de débit et/ou de température.

L'invention vise aussi une méthode de régulation en température d'une pile à combustible dont le refroidissement est assuré par un fluide caloporteur parcourant la pile, comportant les étapes suivantes :
- mesurer la température du fluide caloporteur,
- commander le débit dudit fluide caloporteur en fonction de ladite mesure de température,
- mesurer le débit du fluide caloporteur,
- commander la température du fluide caloporteur en fonction d'un écart entre la mesure du débit du fluide caloporteur et la commande en débit dudit fluide caloporteur pour compenser ledit écart de débit.

La commande du débit du fluide caloporteur est réalisée en fonction de la mesure de température de sortie de la pile et la commande de la température du fluide caloporteur correspond à la commande de la température d'entrée de la pile.

Avantageusement, la méthode comporte une étape de correction thermique pour corriger la commande de température d'entrée en fonction d'un écart entre une température d'entrée souhaitée avec la mesure correspondante de ladite température d'entrée.

### Brève description des dessins

L'invention sera mieux comprise à la lecture de la description faite ci-après, à titre indicatif mais non limitatif, en référence aux dessins annexés sur lesquels :
- la figure 1, est une vue schématique d'un dispositif comprenant une pile à combustible et un système de régulation en température de la pile, selon l'invention ;
- la figure 2 est une vue schématique d'un autre mode de réalisation d'un système de régulation en température, selon l'invention ;
- la figure 3 est une vue plus détaillée d'un mode de réalisation du système de régulation en température de la pile à combustible selon la figure 1 ;
- la figure 4 est une vue plus détaillée d'un mode de réalisation du système de régulation en température de la pile à combustible selon la figure 2 ; et
- la figure 5 est une vue schématique d'un système de régulation en température de la pile, selon l'art antérieur.

### Description détaillée des modes de réalisation de l'invention

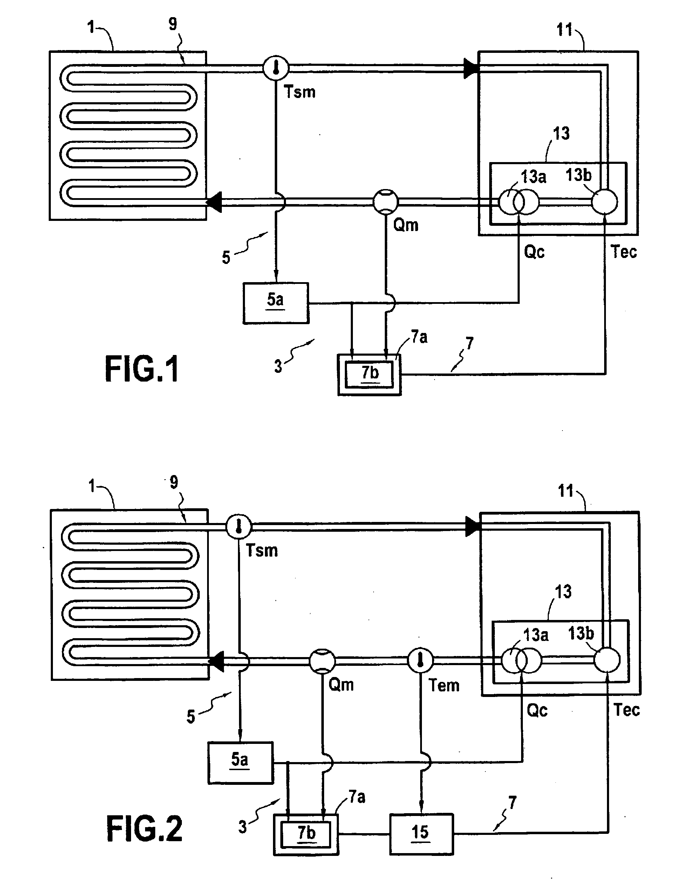

La figure 1 montre un schéma d'un dispositif comprenant une pile à combustible 1 (PAC) et un système de régulation 3 en température de la pile à combustible 1 dont le refroidissement est assuré par un fluide caloporteur ou fluide de refroidissement parcourant la pile 1.

Ce système de régulation 3 comporte une première boucle de commande 5 couplée à une deuxième boucle de commande 7. On notera que les première et deuxième boucles de commande sont associées à des moyens de contrôle ou de commande 5a, 7a adaptés pour la mise en oeuvre de ces boucles de commande. La première boucle de commande 5 comprend un premier moyen de commande 5a qui relève une mesure de température Tsm de ce fluide caloporteur et génère une commande en débit Qc pour commander le débit de ce fluide caloporteur en fonction de la mesure de température Tsm du fluide caloporteur. La deuxième boucle de commande 7 est couplée à la première boucle de commande 5 par l'intermédiaire d'un deuxième moyen de commande 7a. Ce dernier relève une mesure du débit Qm du fluide caloporteur et commande la température Tec du fluide caloporteur en fonction d'un écart de débit entre la commande en débit Qc générée par la première boucle de commande 5 et la mesure correspondante du débit Qm du fluide caloporteur de sorte que la commande de température Tec générée par la deuxième boucle de commande 7 compense une éventuelle défaillance de régulation thermique causée par l'écart du débit. On notera que le débit ou plus précisément la masse du fluide caloporteur échauffée donne une indication de la puissance thermique échangée entre le fluide caloporteur et la pile à combustible 1.

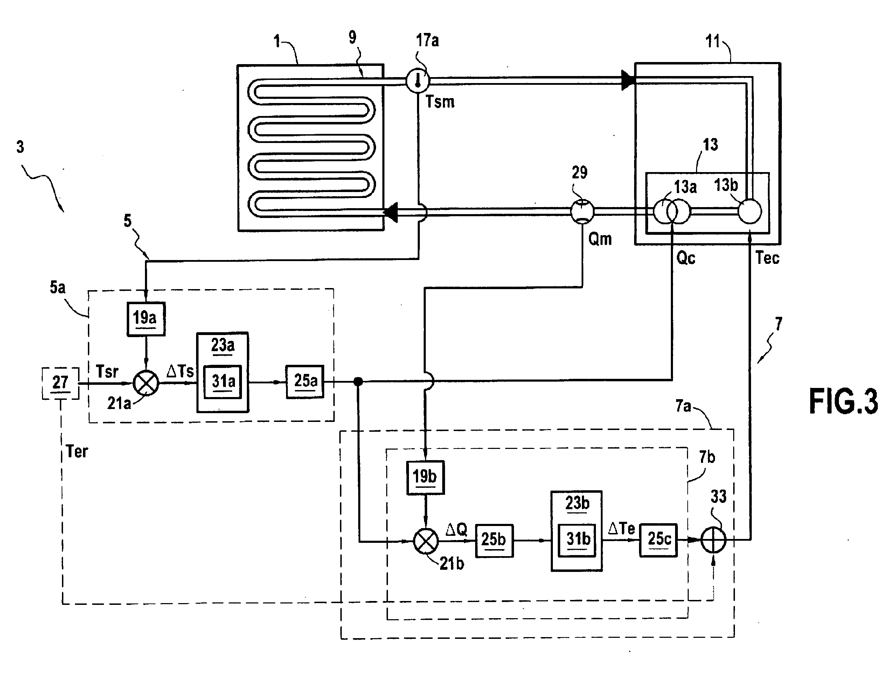

Plus particulièrement, le dispositif de la figure 1 montre que le refroidissement de la pile à combustible 1 est assuré par un circuit de refroidissement 9 qui parcourt des plaques bipolaires (non représentés) de la pile 1 absorbant ainsi les calories dégagées par la réaction de la pile 1. Ce circuit de refroidissement 9 est relié à une source froide 11 comprenant des moyens de régulation 13 pour réguler la température du fluide caloporteur. A titre d'exemple, le fluide caloporteur peut être de l'eau ou tout autre fluide assurant un bon transport thermique. Ainsi, avant son entrée dans le circuit de refroidissement 9 de la pile 1, le fluide caloporteur traverse la source froide 11 dont la tâche est de porter la température du fluide caloporteur à une valeur de consigne ou de référence Tsr. On notera qu'initialement, la commande de température Tec est égale à la température de consigne Tsr. Cette température de consigne Tsr est fournie par un dispositif de contrôle de température de consigne 27 externe ou éventuellement interne au système de régulation en température (voir figure 3). Ainsi, lorsque la température de consigne Tsr du fluide caloporteur est maîtrisée, la régulation en température de la pile 1 consiste à moduler le débit en son entrée.

Avantageusement, la mesure en température du fluide caloporteur en fonction de laquelle agit la première boucle de commande 5 correspond à la mesure de température de sortie Tsm de la pile 1. En effet, la température du fluide caloporteur à la sortie de la pile à combustible 1 reflète de manière appropriée la température globale de cette pile 1. Ainsi, pour réguler la température de la pile à combustible 1, la première boucle de commande 5 module le débit du fluide caloporteur en son entrée dans la pile 1 en agissant sur un actionneur de débit 13a disposé à l'extérieur de la pile 1, par exemple dans les moyens de régulation 13 de la source froide 11.

Par ailleurs, on notera que la puissance thermique échangée entre le fluide caloporteur et la pile à combustible 1 est reliée aussi à l'écart entre la température du fluide caloporteur à son entrée et à sa sortie de la pile à combustible 1. Ainsi, l'ajustement de la température du fluide caloporteur peut procurer un deuxième moyen d'action pour réguler la température de la pile à combustible 1.

En effet, en cas de saturation de l'actionneur de débit 13a modulant le débit du fluide caloporteur, la deuxième boucle de commande 7 module la température du fluide caloporteur avant son entrée dans la pile 1 en agissant sur un actionneur de température 13b disposé dans les moyens de régulation 13 de la source froide 11. Ainsi, la commande de la température du fluide caloporteur correspond à une voie de repli en cas d'indisponibilité de modulation de la commande principale (commande de débit).

Plus particulièrement, la deuxième boucle de commande 7 comporte un moyen de compensation thermique 7b pour déterminer la valeur de la commande de la température Tec du fluide caloporteur générée par la deuxième boucle de commande 7 en comparant la commande en débit Qc générée par la première boucle de commande 5 et la mesure correspondante du débit Qm réalisée par la deuxième boucle de commande 7.

Bien que l'on ait décrit ci-avant le fait que la mesure en température du fluide caloporteur, en fonction de laquelle agit la première boucle de commande 5, correspond à une mesure de température de sortie Tsm de la pile 1 et que la commande en température Tec du fluide caloporteur générée par la deuxième boucle de commande 7 correspond à la température d'entrée de la pile 1, d'autres possibilités peuvent être envisagées.

On notera que la figure 1 est également une illustration des principales étapes de la méthode de régulation selon l'invention dans lequel on mesure la température du fluide caloporteur, on commande le débit du fluide caloporteur en fonction de la mesure de température, on mesure le débit du fluide caloporteur, et on commande la température du fluide caloporteur en fonction d'un écart entre la mesure du débit du fluide caloporteur et la commande en débit du fluide caloporteur pour compenser une défaillance de régulation thermique causée par l'écart de débit.

La figure 2 montre un autre mode de réalisation d'un système de régulation 3 en température d'une pile à combustible 1 qui comporte un moyen de correction thermique 15 en plus des première et deuxième boucles de commande 5 et 7 décrit précédemment.

En effet, ce système correspond à une régulation multi-niveaux de la température de la pile 1 comportant une première boucle de commande 5 couplée à une deuxième boucle de commande 7 et un moyen de correction thermique 15. Ce dernier permet d'adapter la commande de température d'entrée Tec en fonction d'un écart entre une température d'entrée souhaitée avec la mesure correspondante de la température d'entrée Tem du fluide caloporteur.

De même, la figure 2 est également une illustration des principales étapes de la méthode de régulation selon l'invention comportant en plus des étapes de la figure 1, une étape de correction thermique pour corriger la commande de température d'entrée Tec.
La figure 3 est une vue plus détaillée d'un mode de réalisation du système de régulation 3 en température de la pile à combustible 1 selon la figure 1.
La figure 3 montre que la première boucle de commande 5 comporte un premier capteur de température 17a, un premier moyen de validation 19a, un premier moyen de comparaison 21a, un premier moyen de correction 23a et un premier moyen de filtrage 25a.

Le premier capteur de température 17a permet de mesurer la température de sortie Tsm du fluide caloporteur à la sortie de la pile 1 donnant ainsi une bonne indication de la température de cette pile 1. On notera que le premier capteur de température 17a peut correspondre à une pluralité de capteurs de température pour prélever une pluralité de mesures en parallèle.

Le premier moyen de validation 19a permet de valider la mesure de température de sortie Tsm. En particulier, plusieurs mesures de températures peuvent être prélevées en parallèle par le premier capteur de température 17a avant d'être filtrées et validées par le premier moyen de validation 19a pour s'assurer que la mesure de température de sortie Tsm est correcte.

Le premier moyen de comparaison 21a permet de comparer la mesure validée de température de sortie Tsm à une température de sortie de consigne Tsr prédéterminée afin de détecter un éventuel écart de température de sortie (ΔTs=Tsm-Tsr). La consigne en température de sortie Tsr et éventuellement d'entrée Ter sont des températures prédéterminées par un dispositif de contrôle 27 (représenté en pointillé).

Le premier moyen de correction 23a comporte un premier intégrateur 31a muni d'un moyen de protection en amplitude (anti-windup) et permet de déterminer la commande en débit Qc du fluide caloporteur en fonction de l'écart de température de sortie ΔTs. Ainsi, la commande en débit Qc générée par la première boucle de commande 5 peut être modulée pour réguler la température de la pile 1.

Le premier moyen de filtrage 25a permet de filtrer en vitesse et en amplitude la commande en débit Qc avant d'envoyer cette commande à la source froide 11 afin de protéger le dispositif contre une commande de débit aberrante. En effet, le signal de la commande en débit Qc généré par le premier moyen de correction 23a est soumis à une limitation en amplitude et en vitesse en relation avec les performances maximales admises par le dispositif avant d'être envoyé vers la source froide 11 pour agir sur l'actionneur du débit 13a du circuit de refroidissement 9.

Ainsi, la première boucle de commande 5 régule la température de sortie du fluide caloporteur à la sortie de la pile 1 en générant une commande de débit Qc qui ajuste le débit de ce fluide caloporteur dans le circuit de refroidissement 9.

La deuxième boucle de commande 7 comporte un capteur de débit 29, un deuxième moyen de validation 19b, un deuxième moyen de comparaison 21b, un deuxième moyen de filtrage 25b, un deuxième moyen de correction 23b, un troisième moyen de filtrage 25c, et un moyen d'addition 33.

Le capteur de débit 29 permet de mesurer le débit Qm du fluide caloporteur dans le circuit de refroidissement 9 par exemple, au niveau de l'entrée de la pile à combustible 1. On notera que le capteur de débit 29 peut correspondre à une pluralité de capteurs de débit pour prélever une pluralité de mesures en parallèle.

Le deuxième moyen de validation 19b permet de valider la mesure du débit Qm. En particulier, plusieurs mesures de débit peuvent être prélevées en parallèle par le capteur de débit 29 avant d'être filtrées et validées par le deuxième moyen de validation 19b pour s'assurer que la mesure du débit Qm est correcte.

Le deuxième moyen de comparaison 21b permet de comparer la mesure de débit Qm validée du fluide de refroidissement à la commande en débit Qc générée par la première boucle de commande 5 afin de déterminer un éventuel écart de débit ΔQ= Qm-Qc.

Le deuxième moyen de filtrage 25b permet de filtrer cet écart de débit ΔQ afin de le limiter en amplitude avant d'attaquer le deuxième moyen de correction 23b.

Le deuxième moyen de correction 23b permet de déterminer la correction en température ΔTe par rapport à une température d'entrée de consigne ou de référence Ter prédéterminée. La température d'entrée de consigne Ter est une température prédéterminée par le dispositif de contrôle 27. Cette température d'entrée de consigne Ter peut être réglée initialement à une température inférieure de quelques degrés (par exemple 10°C) de la température souhaitée de sortie de consigne Tsr. Ainsi, en connaissant l'écart de débit ΔQ, le deuxième moyen de correction 23b peut calculer la correction nécessaire en température d'entrée ΔTe pour le bon fonctionnement de la pile 1. On notera que cette correction peut s'appliquer pour une saturation positive ou négative en débit. Bien entendu, le deuxième moyen de correction 23b ne modifie pas la température d'entrée de consigne Ter lorsqu'il n'y a pas de saturation en débit. Par ailleurs, en cas d'un positionnement en boucle ouverte de la régulation de température d'entrée de consigne Ter, la fonction de compensation en température de la deuxième boucle de commande 7 est inhibée.

Plus particulièrement, le deuxième moyen de correction 23b comporte un deuxième intégrateur 31b muni d'un moyen de protection en amplitude (anti-windup). Ainsi, le deuxième intégrateur 31b est protégé par la fonction anti-windup en vitesse et en amplitude. Par ailleurs, des zones mortes peuvent être installées en amont de l'intégrateur 31b afin de limiter les conséquences des fluctuations ou bruit au voisinage de zéro.

Le troisième moyen de filtrage 25c permet de filtrer la correction de température d'entrée ΔTe.

Le moyen d'addition 33 permet d'ajouter la correction de température ΔTe à la température d'entrée de consigne Ter prédéterminée afin de définir le signal de commande de température d'entrée Tec qui est envoyé vers la source froide 11 pour agir sur l'actionneur de température 13b du circuit de refroidissement 9. Ainsi, le signal de commande de température d'entrée Tec permet d'agir sur la température d'entrée du fluide caloporteur pour compenser l'éventuel dérèglement thermique causé par tout écart de débit.

Ainsi, la deuxième boucle de commande 7 a pour fonction de générer une nouvelle consigne de température du fluide caloporteur si les capacités de refroidissement ne sont plus couvertes par la correction de débit de la première boucle de commande 5.

On notera que si le débit retourne après saturation dans le domaine de fonctionnement, il est avantageux de maintenir la consigne de température en l'état afin d'éviter des couplages pouvant générer des oscillations entre la première et la deuxième boucles de commandes 5 et 7. Toutefois, une saturation négative en débit peut permettre de remonter la température pour revenir en situation de consigne initiale, (c'est-à-dire, la température d'entrée de commande Tec égale à la température d'entrée de consigne Ter).

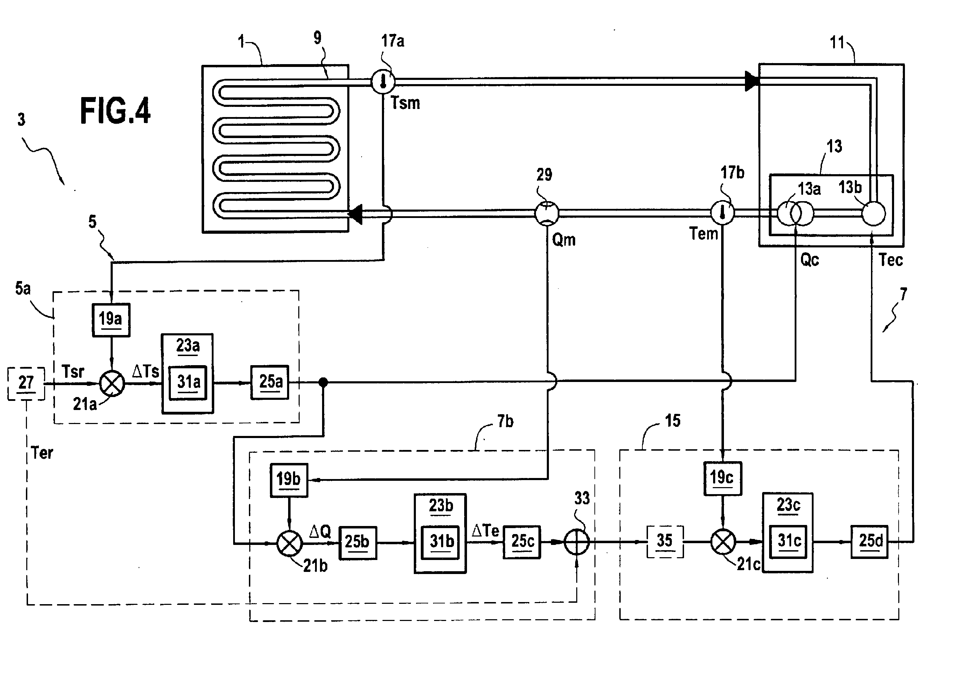

La figure 4 est une vue plus détaillée d'un mode de réalisation du système de régulation en température de la pile à combustible selon la figure 2.

Le mode de réalisation de la figure 4 se distingue de celui de la figure 3 par le fait qu'il comporte en outre un moyen de correction thermique 15 comprenant un deuxième capteur de température 17b, un troisième moyen de validation 19c, un troisième moyen de comparaison 21c, un troisième moyen de correction 23c et un quatrième moyen de filtrage 25d.

Le moyen de correction thermique 15 a pour fonction de compenser les erreurs en terme de température en entrée de la pile 1. Il permet de couvrir les incertitudes de la régulation thermique de la source froide 11 et de compenser les pertes thermiques de la ligne d'alimentation entre la pile 1 et la source froide 11. En outre, le moyen de correction thermique 15 permet de compenser en permanence, les éventuelles dérives des capteurs de mesures ou l'évolution des coefficients d'échange thermique du dispositif au cours du temps permettant ainsi de contribuer à l'augmentation de la durée de vie de la pile à combustible.

Plus particulièrement, le deuxième capteur de température 17b permet de mesurer la température d'entrée Tem du fluide caloporteur à l'entrée de la pile 1. On notera que le deuxième capteur de température 17b peut correspondre à une pluralité de capteurs de température pour prélever une pluralité de mesures en parallèle.

Le troisième moyen de validation 19c permet de valider la mesure de la température d'entrée Tem. En effet, comme précédemment, plusieurs mesures de températures peuvent être prélevées en parallèle avant d'être filtrées et validées par le troisième moyen de validation 19c pour s'assurer que la mesure de la température d'entrée Tem est correcte.

Le troisième moyen de comparaison 21c permet de comparer la valeur de la mesure validée de la température d'entrée Tem à la valeur de la commande de température d'entrée Te afin de détecter un éventuel écart de température d'entrée.

Le troisième moyen de correction 23c permet d'adapter la commande de température d'entrée Tec en fonction de cet éventuel écart de température d'entrée. Comme précédemment, le troisième moyen de correction 23c comporte un troisième intégrateur 31c muni d'un moyen de protection en amplitude (anti-windup). Ainsi, le troisième intégrateur 31c permet de modifier en permanence la consigne en température d'entrée émise vers la source froide 11 afin de garantir la bonne température du fluide caloporteur à l'entrée de la pile 1.

Le quatrième moyen de filtrage 25d permet de filtrer la commande de température d'entrée Tec pour limiter l'amplitude de la température afin de respecter les contraintes du dispositif.

Eventuellement, le moyen de correction thermique 15 peut comporter un autre moyen de filtrage 35 (représenté en pointillé) entre le moyen d'addition 33 et le troisième moyen de comparaison 21c.

Ainsi, le système de régulation 3 en température selon l'invention répond aux perturbations issues des conditions d'interface ou aux dérives de composants internes du système. Ces perturbations, issues d'une dégradation ou modifications de performances selon le point de fonctionnement, sont en général de type très basse fréquence. En générale, ces instationnarités sont au minimum à une décade inférieure à la bande passante de régulation.

Plus particulièrement, les moyens de validations 19a, 19b, 19c permettent une acquisition des données ou paramètres de mesure de température ou de débit selon une période prédéterminée, un filtrage de chacune des mesures (par exemple, en appliquant un filtre du deuxième ordre), une validation de chacune des mesures par rapport à sa plage physique, et un test de cohérence entre les différentes mesures. Ainsi, toutes les données de mesure de température ou de débit nécessaires pour la commande du système sont validées. A défaut, le système de régulation 3 se positionnera en boucle ouverte sur un point de fonctionnement sécurisé.

Les moyens de filtrages 25a à 25d et 35 permettent de limiter les ordres et les vitesses de variation émis vers les organes ou actionneurs de réglage 13a et 13b.

En outre, les moyens de correction 23a à 23c comportent avantageusement des intégrateurs 31a à 31c munis des moyens anti-wind-up qui permettent de ne pas commander les actionneurs de réglage 13a et 13b selon des ordres trop importants vis-à-vis de la dynamique naturelle de ces actionneurs et de protéger le système contre des variations trop rapides des commandes.

On notera que le système de régulation en température peut être réalisé par une ou plusieurs cartes électroniques pouvant comprendre de manière classique une unité de traitement, une ou plusieurs mémoires, une unité d'entrée et une unité de sortie adaptées pour la mise en oeuvre des moyens de validation de mesure, des moyens de gestion des commandes et de sécurités et des moyens d'asservissement selon l'invention.

## Revendications

1. Système de régulation en température d'une pile à combustible (1) dont le refroidissement est assuré par un fluide caloporteur parcourant la pile, ledit système de régulation en température comportant un premier moyen de commande (5a) pour mesurer la température (Tsm) du fluide caloporteur et pour commander le débit du fluide caloporteur en fonction de ladite mesure de température (Tsm) dudit fluide caloporteur, **caractérisé en ce qu'**il comporte un deuxième moyen de commande (7a) pour mesurer le débit (Qm) du fluide caloporteur et pour commander la température d'entrée (Tec) du fluide caloporteur en fonction d'un écart de débit entre la commande en débit (Qc) générée par ledit premier moyen de commande (5a) et ladite mesure correspondante du débit (Qm) dudit fluide caloporteur, et un actionneur de température (13b) pour réguler la température du fluide caloporteur, connecté au deuxième moyen de commande pour recevoir la commande de température d'entrée (Tec), de sorte que ladite commande de température (Tec) générée par le deuxième moyen de commande (7a) compense ledit écart de débit.

2. Système selon la revendication 1, **caractérisé en ce qu'**il comporte un moyen de compensation thermique (7b) pour déterminer la valeur de la commande de la température (Tec) du fluide caloporteur générée par ledit deuxième moyen de commande (7a) en comparant la commande en débit (Qc) générée par ledit premier moyen de commande (5a) et la mesure correspondante du débit (Qm) réalisée par ledit deuxième moyen de commande (7a).

3. Système selon la revendication 1 ou 2, **caractérisé en ce que** le premier moyen de commande (5a) est apte à mesurer la température du fluide caloporteur en sortie (Tsm) de la pile à combustible (1) et à commander le débit du fluide caloporteur en fonction de cette mesure effectuée en sortie de ladite pile (1) et **en ce que** le deuxième moyen de commande (7a) est apte à mesurer le débit (Qm) du fluide caloporteur et à commander la température du fluide caloporteur à l'entrée (Tec) de la pile à combustible (1).

4. Système selon la revendication 3, **caractérisé en ce qu'**il comporte un moyen de correction thermique (15) pour adapter la commande de température d'entrée (Tec) en fonction d'un écart entre une température d'entrée souhaitée avec la mesure correspondante de ladite température d'entrée.

5. Système selon la revendication 3, **caractérisé en ce qu'**il comporte :
- un premier capteur de température (17a) pour mesurer ladite température de sortie (Tsm) du fluide caloporteur à la sortie de la pile (1),
- un premier moyen de validation (19a) pour valider ladite mesure de température de sortie (Tsm),
- un premier moyen de comparaison (21a) pour comparer ladite mesure validée de température de sortie (Tsm) à une température de sortie de consigne (Tsr) prédéterminée afin de détecter un éventuel écart de température de sortie,
- un premier moyen de correction (23a) pour déterminer la commande en débit (Qc) du fluide caloporteur générée par ledit premier moyen de commande (5a) en fonction dudit écart de température de sortie, et
- un premier moyen de filtrage (25a) pour filtrer ladite commande en débit (Qc).

6. Système selon la revendication 5, **caractérisé en ce qu'**il comporte en outre :
- un capteur de débit (29) pour mesurer le débit (Qm) du fluide caloporteur,
- un deuxième moyen de validation (19b) pour valider ladite mesure du débit,
- un deuxième moyen de comparaison (21b) pour comparer la mesure de débit (Qm) validée du fluide de refroidissement à ladite commande en débit (Qc) générée par le premier moyen de commande (5a) afin de déterminer ledit écart de débit,
- un deuxième moyen de filtrage (25b) pour filtrer ledit écart de débit,
- un deuxième moyen de correction (23b) pour déterminer la correction de température à apporter à une température d'entrée de consigne (Ter) prédéterminée,
- un troisième moyen de filtrage (25c) pour filtrer ladite correction de température d'entrée, et
- un moyen d'addition (33) pour ajouter ladite correction de température à la température d'entrée de consigne (Ter) prédéterminée afin de définir ladite commande de température d'entrée (Tec) générée par le deuxième moyen de commande (7a).

7. Système selon la revendication 5 ou 6, **caractérisé en ce qu'**il comporte en outre :
- un deuxième capteur de température (17b) pour mesurer la température d'entrée (Tem) du fluide caloporteur à l'entrée de la pile,
- un troisième moyen de validation (19c) pour valider la mesure de ladite température d'entrée (Tem),
- un troisième moyen de comparaison (21c) pour comparer ladite mesure validée de la température d'entrée (Tem) à ladite commande de température d'entrée (Tec) issue du deuxième moyen de commande (7a) afin de détecter un éventuel écart de température d'entrée,
- un troisième moyen de correction (23c) pour adapter la commande de température d'entrée en fonction dudit écart de température d'entrée, et
- un quatrième moyen de filtrage (25d) pour filtrer ladite commande de température d'entrée.

8. Système selon la revendication 7, **caractérisé en ce que** lesdits premier, deuxième et troisième moyens de correction (23a, 23b, 23c) comportent chacun un intégrateur (31a, 31b, 31c) muni d'un moyen de protection de type anti-windup.

9. Pile à combustible comportant un système de régulation (3) selon l'une quelconque des revendications 1 à 8, **caractérisé en ce qu'**il comporte un circuit de refroidissement (9) assurant le refroidissement de la pile (1) par le fluide caloporteur ledit circuit de refroidissement étant relié au système de régulation (3) pour y recevoir les commandes de débit et/ou de température.

10. Méthode de régulation en température d'une pile à combustible dont le refroidissement est assuré par un fluide caloporteur parcourant la pile, comportant les étapes suivantes :
- mesurer la température du fluide caloporteur, et
- commander le débit dudit fluide caloporteur en fonction de ladite mesure de température, **caractérisé en ce qu'**il comporte en outre les étapes suivantes :
- mesurer le débit du fluide caloporteur,
- commander la température du fluide caloporteur en fonction d'un écart entre la mesure du débit du fluide caloporteur et la commande en débit dudit fluide caloporteur pour compenser une défaillance de régulation thermique causée par ledit écart de débit.

11. Méthode selon la revendication 10, **caractérisé en ce que** la commande du débit du fluide caloporteur est réalisée en fonction de la mesure de température de sortie Tsm de la pile et **en ce que** la commande de la température du fluide caloporteur correspond à la commande de la température d'entrée Te de la pile.

12. Méthode selon la revendication 11, **caractérisé en ce qu'**il comporte une étape de correction thermique pour corriger la commande de température d'entrée Tec en fonction d'un écart entre une température d'entrée souhaitée avec la mesure correspondante de ladite température d'entrée.

## Claims

1. A system for regulating the temperature of a fuel cell (1) that is cooled by a cooling fluid traveling through the cell, said system for regulating the temperature including first control means (5a) for measuring the temperature (Tsm) of the cooling fluid and for controlling the flow rate of the controlling fluid as a function of said measured temperature (Tsm) of said cooling fluid, **characterized in that** it includes a second control means (7a) for measuring the flow rate (Qm) of the cooling fluid and for controlling the inlet temperature (Tec) of the cooling fluid as a function of a flow rate difference between the command flow rate (Qc) specified by said first control means (5a) and said corresponding measured flow rate (Qm) of said cooling fluid and a temperature activator (13b) for regulating the cooling fluid temperature, connected to the second control means for receiving the command inlet temperature (Tec), such that said command temperature (Tec) specified by the second control means (7a) compensates for said flow rate difference.

2. A system according to claim 1, **characterized in that** it includes temperature compensation means (7b) for determining the value of the command temperature (Tec) for the cooling fluid as specified by said second control means (7a) by comparing the command flow rate (Qc) specified by said first control means (5a) with the corresponding measurement of flow rate (Qm) taken by said second control means (7a).

3. A system according to claim 1 or 2, **characterized in that** the first control means (5a) is able to measure the cooling fluid temperature (Tsm) at the outlet of the fuel cell (1) and to command the cooling fluid flow rate as a function of this measurement made at the outlet from said cell (1) and **in that** the second control means (7a) is able to measure the flow (Qm) from the cooling fluid and to command the temperature (Tec) at the cooling fluid outlet of the fuel cell (1).

4. A system according to claim 3, **characterized in that** it includes temperature correction means (15) to adapt the command inlet temperature (Tec) as a function of the difference between a desired inlet temperature and the corresponding measurement of said inlet temperature.

5. A system according to claim 3, **characterized in that** it comprises:
- a first temperature sensor (17a) for measuring said outlet temperature (Tsm) of the cooling fluid at the outlet from the cell (1);
- a first validation means (19a) for validating said measurement of outlet tempeature (Tsm),
- a first comparator means (21a) for comparing said validated measurement of outlet temperature (Tsm) with a predetermined setpoint outlet temperature (Tsr) in order to detect any outlet temperature difference;
- a first corrector means (23a) for determining the command flow means (Qc) for the cooling fluid as specified by said first control means (5a) as a function of said outlet temperature difference; and
- a first filter means (25a) for filtering said command flow rate (Qc).

6. A system according to claim 5, **characterized in that** it further comprises:
- a flow rate sensor (29) for measuring the flow rate (Qm) of the cooling fluid,
- a second validation means (19b) to validating said flow rate measurement,
- a second comparator means (21b) for comparing the validated measured flow rate (Qm) of the cooling fluid with said command flow rate (Qc) specified by the first control means (5a) in order to determine said flow rate difference,
- a second filtering means (25b) for filtering said flow rate difference,
- a second corrector means (23b) for determining the temperature correction to be applied to a predetermined setpoint inlet temperature (Ter),
- a third filtering means (25c) for filtering said inlet temperature correction; and
- adder means (33) for adding said temperature correction to the predetermined setpoint inlet temperature (Ter) in order to define said command inlet temperature (Tec) generated by the second control means (7a).

7. A system according to claims 5 or claim 6, **characterized in that** it further comprises:
- a second temperature sensor (17b) for measuring the inlet temperature (Tem) of the cooling fluid at the cell inlet;
- a third validation means (19c) for validating the measurement of said inlet temperature (Tem);
- a third comparator means (21c) for comparing said validated measurement of the inlet temperature (Tem) with said command inlet temperature (Tec) from the second control means (7a) in order to detect any inlet temperature difference;
- a third corrector means (23c) for adapting the command inlet temperature as a function of said inlet temperature difference; and
- a fourth filtering means (25d) for filtering said command inlet temperature.

8. A system according to claim 7, **characterized in that** each of said first, second, and third corrector means (23a, 23b, 23c) includes a respective integrator (31a, 31b, 31c) provided with an anti-windup type protection means.

9. A fuel cell including a regulating system (3) according to any one of claims 1 to 8, **characterized in that** it includes a cooling circuit (9) for cooling the cell (1) by means of a cooling fluid, said cooling circuit being connected to the regulating system (3) to receive therefrom the command flow rate and/or the command temperature.

10. A method of regulating the temperature of a fuel cell that is cooled by a cooling fluid passing through the cell, comprising the following steps:
- measuring the temperature of the cooling fluid, and
- controlling the flow rate of said cooling fluid as a function of said temperature measurement, **characterized in that** it further comprises the following steps:
- measuring the flow rate of the cooling fluid,
- controlling the temperature of the cooling fluid as a function of a difference between the measured flow rate of the cooling fluid and the command flow rate for said cooling fluid in order to compensate for failure of temperature regulation caused by said flow rate difference.

11. A method according to claim 10, **characterized in that** the flow rate of the cooling fluid is controlled as a function of the temperature Tsm measured at the outlet of the fuel cell, and **in that** the command temperature for the cooling fluid corresponds to the command cell inlet temperature Te.

12. A method according to claim 11, **characterized in that** it includes a temperature correction step for correcting the command inlet temperature Tec as function of a difference between a desired inlet temperature and the corresponding measurement of said inlet temperature.

## Patentansprüche

1. System zur Temperaturregelung einer Brennstoffzelle (1), deren Kühlung durch ein die Zelle durchströmendes Kühlmittel sichergestellt wird, wobei das Temperaturregelungssystem ein erstes Steuermittel (5a) zum Messen der Temperatur (Tsm) des Kühlmittels und zum Steuern des Durchsatzes des Kühlmittels in Abhängigkeit der Messung der Temperatur (Tsm) des Kühlmittels umfaßt, **dadurch gekennzeichnet, daß** es ein zweites Steuermittel (7a) zum Messen des Durchsatzes (Qm) des Kühlmittels und zum Steuern der Eingangstemperatur (Tec) des Kühlmittels in Abhängigkeit einer Durchsatzabweichung zwischen dem durch das erste Steuermittel (5a) generierten Befehl für den Durchsatz (Qc) und der entsprechenden Messung des Durchsatzes (Qm) des Kühlmittels, sowie ein Temperaturstellglied (13b) zum Regeln der Temperatur des Kühlmittels umfaßt, das mit dem zweiten Steuermittel verbunden ist, um den Befehl der Eingangstemperatur (Tec) zu empfangen, so daß der durch das zweite Steuermittel (7a) generierte Befehl der Temperatur (Tec) die Durchsatzabweichung kompensiert.

2. System nach Anspruch 1, **dadurch gekennzeichnet, daß** es ein Wärmekompensationsmittel (7b) umfaßt, um den Wert des durch das zweite Steuermittel (7a) generierten Befehls der Temperatur (Tec) des Kühlmittels dadurch zu bestimmen, daß der durch das erste Steuermittel (5a) generierte Befehl für den Durchsatz (Qc) und die durch das zweite Steuermittel (7a) durchgeführte entsprechende Messung des Durchsatzes (Qm) verglichen werden.

3. System nach Anspruch 1 oder 2, **dadurch gekennzeichnet, daß** das erste Steuermittel (5a) geeignet ist, die Temperatur (Tsm) des Kühlmittels am Ausgang der Brennstoffzelle (1) zu messen und den Durchsatz des Kühlmittels in Abhängigkeit dieser am Ausgang der Zelle (1) durchgeführten Messung zu steuern, und daß das zweite Steuermittel (7a) geeignet ist, den Durchsatz (Qm) des Kühlmittels zu messen und die Temperatur des Kühlmittels am Eingang (Tec) der Brennstoffzelle (1) zu steuern.

4. System nach Anspruch 3, **dadurch gekennzeichnet, daß** es ein Wärmekorrekturmittel (15) umfaßt, um die Steuerung der Eingangstemperatur (Tec) in Abhängigkeit einer Abweichung zwischen einer gewünschten Eingangstemperatur und der entsprechenden Messung der Eingangstemperatur anzupassen.

5. System nach Anspruch 3, **dadurch gekennzeichnet, daß** es umfaßt:
- einen ersten Temperaturfühler (17a) zum Messen der Ausgangstemperatur (Tsm) des Kühlmittels am Ausgang der Zelle (1),
- ein erstes Bestätigungsmittel (19a) zum Bestätigen der Messung der Ausgangstemperatur (Tsm),
- ein erstes Vergleichsmittel (21 a) zum Vergleichen der bestätigten Messung der Ausgangstemperatur (Tsm) mit einer vorbestimmten Sollausgangstemperatur (Tsr), um eine eventuelle Ausgangstemperaturabweichung zu erfassen,
- ein erstes Korrekturmittel (23a) zum Festlegen des durch das erste Steuermittel (5a) generierten Befehls für den Durchsatz (Qc) des Kühlmittels in Abhängigkeit der Ausgangstemperaturabweichung und
- ein erstes Filtermittel (25a) zum Filtern des Befehls für den Durchsatz (Qc).

6. System nach Anspruch 5, **dadurch gekennzeichnet, daß** es ferner umfaßt:
- einen Durchsatzfühler (29) zum Messen des Durchsatzes (Qm) des Kühlmittels,
- ein zweites Bestätigungsmittel (19b) zum Bestätigen der Messung des Durchsatzes,
- ein zweites Vergleichsmittel (21 b) zum Vergleichen der bestätigten Messung des Durchsatzes (Qm) des Kühlmittels mit dem durch das erste Steuermittel (5a) generierten Befehl für den Durchsatz (Qc), um die Durchsatzabweichung zu bestimmen,
- ein zweites Filtermittel (25b) zum Filtern der Durchsatzabweichung,
- ein zweites Korrekturmittel (23b) zum Festlegen der Temperaturkorrektur, die an einer vorbestimmten Solleingangstemperatur (Ter) vorzunehmen ist,
- ein drittes Filtermittel (25c) zum Filtern der Eingangstemperaturkorrektur und
- ein Additionsmittel (33) zum Hinzufügen der Temperaturkorrektur zu der vorbestimmten Solleingangstemperatur (Ter), um den durch das zweite Steuermittel (7a) generierten Befehl der Eingangstemperatur (Tec) zu definieren.

7. System nach Anspruch 5 oder 6, **dadurch gekennzeichnet, daß** es ferner umfaßt:
- einen zweiten Temperaturfühler (17b) zum Messen der Eingangstemperatur (Tem) des Kühlmittels am Eingang der Zelle,
- ein drittes Bestätigungsmittel (19c) zum Bestätigen der Messung der Eingangstemperatur (Tem),
- ein drittes Vergleichsmittel (21 c) zum Vergleichen der bestätigten Messung der Eingangstemperatur (Tem) mit dem von dem zweiten Steuermittel (7a) kommenden Befehl der Eingangstemperatur (Tec), um eine eventuelle Eingangstemperaturabweichung zu erfassen,
- ein drittes Korrekturmittel (23c) zum Anpassen des Eingangstemperaturbefehls in Abhängigkeit der Eingangstemperaturabweichung und
- ein viertes Filtermittel (25d) zum Filtern des Eingangstemperaturbefehls.

8. System nach Anspruch 7, **dadurch gekennzeichnet, daß** das erste, das zweite und das dritte Korrekturmittel (23a, 23b, 23c) jeweils einen Integrator (31 a, 31 b, 31 c), welcher mit einem Schutzmittel vom Typ Anti-Windup ausgestattet ist, umfassen.

9. Brennstoffzelle, umfassend ein Regelungssystem (3) nach einem der Ansprüche 1 bis 8, **dadurch gekennzeichnet, daß** sie einen Kühlkreislauf (9) umfaßt, der die Kühlung der Zelle (1) durch das Kühlmittel sicherstellt, wobei der Kühlkreislauf mit dem Regelungssystem (3) verbunden ist, um dort die Durchsatz- und/oder Temperaturbefehle zu empfangen.

10. Verfahren zur Temperaturregelung einer Brennstoffzelle, deren Kühlung durch ein die Zelle durchströmendes Kühlmittel sichergestellt wird, umfassend die folgenden Schritte:
- Messen der Temperatur des Kühlmittels und
- Steuern des Durchsatzes des Kühlmittels in Abhängigkeit der Temperaturmessung, **dadurch gekennzeichnet, daß** es ferner die folgenden Schritte umfaßt:
- Messen des Durchsatzes des Kühlmittels,
- Steuern der Temperatur des Kühlmittels in Abhängigkeit einer Abweichung zwischen der Messung des Durchsatzes des Kühlmittels und dem Befehl für den Durchsatz des Kühlmittels, um einen durch die Durchsatzabweichung verursachten Wärmeregelungsfehler zu kompensieren.

11. Verfahren nach Anspruch 10, **dadurch gekennzeichnet, daß** die Steuerung des Durchsatzes des Kühlmittels in Abhängigkeit der Messung der Ausgangstemperatur Tsm der Zelle vollzogen wird und daß die Steuerung der Temperatur des Kühlmittels der Steuerung der Eingangstemperatur Te der Zelle entspricht.

12. Verfahren nach Anspruch 11, **dadurch gekennzeichnet, daß** es einen Wärmekorrekturschritt umfaßt, um die Steuerung der Eingangstemperatur Tec in Abhängigkeit einer Abweichung zwischen einer gewünschten Eingangstemperatur und der entsprechenden Messung der Eingangstemperatur zu korrigieren.
